# EUROPEAN PATENT APPLICATION

(11) **EP 1 376 950 A1**
(43) Date of publication of application: **02.01.2004**
(21) Application number: 02425411.2
(22) Date of filing: 21.06.2002
(51) Int. Cl.: H04L 12/56, H04Q 7/22

(54) **Method for releasing single TBFs in a mobile radio system**

(71) Applicant: Siemens Information and Communication Networks S.p.A., 20126 Milano (IT)
(72) Inventor: De Benedittis, Rossella, 20137 Milano (IT); Piana, Fabio Domenico, 20081 Abbiategrasso (IT)
(74) Representative: Giustini, Delio

(57) **Abstract**

In mobile radio networks of second (GSM-GPRS) and third Generation (3G) a packet data service is provided. Packed data are transmitted on temporary connections named temporary block flow (TBF) set up in one or both the transmission directions independently. To open and maintain a TBF some dedicated resources shall be allocated by the network, for example: carrier, timeslots, codes (in case of CDMA), buffer memory for data queues. Mobiles shall forward to the network a request to open a TBF, while the the release automatically follows the end of the active session, when the network acknowledges the uplink radio block marked as the last. Due to the bursty nature of packet services, it can very well happen that packet data are delivered by the application layer not continuously in time but with some delay in between, like the case which after sending the last assumed data packet, the uplink TBF will be released, and that some time later a new data packet is delivered for transmission by the same application. This requires, if no downlink TBF is in progress, the opening of a new uplink TBF through the common channels, thus resulting more time consuming and less efficient. To delay the final release of the resources temporarily allocated to an uplink TBF, the network sends an acknowledgement message granting the last received uplink radio block, including in the ACK message content a valid extension field (Txxxx,E/D) containing a counting value of the radio frames passed since then. Then the network starts the extension counting (Txxxx) during which a request for the new uplink TBF from the mobile, or any downlink message involving the listening by the mobile, is valid up to said counting expires. The mobile receives via ACK message the extension field (Txxxx,E/D) and starts the extension counting during which it knows the resources allocated to uphold the uplink packet transmission are kept reserved by the network until said counting expires and that during that time it is allowed to request for new uplink TBF as well as the network can request for a downlink TBF (fig 10).

## Description

### FIELD OF THE INVENTION

The following invention finds application in the field of data packet transmission performed by cellular systems of second Generation like GSM-GPRS (Global System for Mobile communications - General Packet Radio Service) or third Generation (3G) like UMTS (Universal Mobile Telecommunication System), indifferently, and in particular defining a method to close an uplink TBF (Temporary Block Flow) keeping the radio resources (i.e. the physical carriers of the data streams) active for a configurable time interval during which a new TBF, both uplink and downlink, can be quickly installed.

### BACKGROUND ART

Packet services are included in the context of the emerging services offered by second-generation cellular network, such as for instance the GSM network. This led to the definition and publication of new technical specifications concerning a packet switching service on the existing GSM networks. The service is known under GPRS acronym (General Packet Radio Service) but the term can also be used to define the system or the network where the service is performed. The packet switching routing is "connectionless" due to its nature, that is, it does not require the constant use of physical resources for the whole active session time; consequently, the available resources can be shared among more users who use them alternately only when these are actually needed. The GPRS system avails of its own interfaces and a new SGSN (Service GPRS Support Node) node. The SGSN node is at the same hierarchical level as an MSC (Message Switching Centre) node of GSM, it keeps records of the individual locations of the mobiles and performs the safety and access control functions. To this purpose, the HLR (Home Location Register) record is enriched with the information of the GPRS users. Packet services offer high speed data services to the Mobile Stations (MS) without saturating the network.

The next introduction of 3^{rd} Generation UMTS (Universal Mobile Telecommunication System) systems further improve data service by making possible greater throughputs and the asymmetrical traffic typical of the Internet Protocol (IP). The European 2^{nd} Generation PLMN (Public Land Mobile Network) such as: GSM 900 MHz-GPRS, DCS 1800 MHz (Digital Cellular System), PCS (Personal Communication System) etc, are subjected to recommendations issued by international entities (CEPT/CCITT, ETSI/ITU-T) whose purpose is that of making the operation of the systems of the various manufacturers each other compatible. UMTS systems are subjected to international standards issued by 3GPP (3^{rd} Generation Partnership Project) consortium. In the field of the 3GPP standardisation two CDMA radio access techniques have been defined, respectively known as: TDD UTRA (Time Division Duplex UMTS Terrestrial Radio Access) in which transmission directions are distinguished in the time domain, and WCDMA UTRA (Wide band Code Division Multiple Access UMTS Terrestrial Radio Access); in which transmission directions are distinguished in the frequency domain. The TDD UTRA technique foresees in its turn two options: a broad band one, known as 3.84 Mchips TDD, and a narrow band one, known as 1.28 Mcps TDD or even as TD-SCDMA (Time Division - Synchronous Code Division Multiple Access). The Assignee and CWTS (Chinese Wireless Telecommunication Standards) committee are furthermore engaged in the development of a 3G TD-SCDMA standard which is based on the 3GPP 1.28 Mcps TDD physical layer and reuses much of the GSM-GPRS higher layer functions and procedures, offering the operators a technology able to run on most of the deployed GSM network elements; this standard is known as TD-SCDMA System for Mobile (TSM).

Hereafter the term "mobile station" and "User Equipment" (UE) of UMTS are considered as synonyms.

As known, a public mobile radio system is designed on the basis of a protocol having several hierarchical levels used to manage the telephone signalling present at the different interfaces. Most of the 3G systems employ a suited version of the GSM-GPRS protocol. The layer structure enables to subdivide the signalling protocol functions in groups of superimposed blocks on the Control Plane (C-Plane) and to describe the same as a succession of independent stages. Each level avails of the communication services provided by the lower level and offers its own services to the higher level. Level 1 of the above-mentioned protocol is strictly tied to the type of physical carrier used for the connection at the two sides of the different interfaces; it describes the functions necessary to transfer the bit/chip flows of the radio connections to the on-air interface Am/Um and on terrestrial connections to A-bis and A interfaces. Level 2 develops functions controlling the correct sequential flow of messages (transport functions) in the aim of implementing a virtual carrier without errors between the connected points. Level 3, called network level, and the higher levels, develop processing functions of the messages for the control of the main application processes. The control logic channels of the on-air Am/Um interface route the information in two propagation directions as messages exchanged between the Mobile Station (*MS*) and the network. This information passes over the frame of the Am/Um interface and concerns, more or less, the remaining parts of the network. To enable a regular operation of a complex mobile system it is necessary that messages be regulated both in the shape and in the flow through an appropriate protocol that will be summarised in the following.

Although the physical layers of GSM-GPRS and 3G systems are quite different, the higher levels are quite similar, so that the description of the packet structure and the included messages involving the prior art and the invention are valid for the two type of systems. As far as the physical layer is concerned, it is useful to remind that both GSM-GPRS and 3G systems are based on sequential TDMA (Time Division Multiple Access) frames which synchronise the transmission of data streams over the air; the main difference between GSM and CDMA systems is that during a timeslot one GSM user at a time is enabled on an assigned carrier, while more CDMA users can simultaneously be enabled according to a multiple code access. The CDMA technique employs reciprocally orthogonal spreading code sequences, that is whose cross-correlation can be assumed as null. It just enables the discrimination among the different users summing up in the transmission band, since on a channel characterised by its own code sequence the signals of the other channels, as a result of the correlation, will appear as a noise. Another difference may be the use of the FDMA (Frequency Division Multiple Access) technique by the GSM in comparison with the 3G TDD techniques (e.g. TSM, 1.28 Mcps TDD and 3.84 Mcps TDD), this is particularly true for the duplexing mode. The FDD technique (Frequency Division Duplexing) used by GSM duplexing employs different bands for the uplink and downlink. The two bands are separated by an unused gap band to enable the opportune filtering. The TDD technique (Time Division Duplexing) employs some timeslots of the frame for uplink and the others for downlink. If the time division between the two service times is small, the transmission and reception appear simultaneous to the user.

Turning back the attention to the communication protocol the following layers are pointed out:
- LLC (Logical Link Control): this layer gives a ciphered logic link highly reliable to transport information between level 3 entities in the MS mobile and in the SGSN node. The LLC protocol is specified in GSM 04.64.
- RLC/MAC: the RLC (Radio Link Control) function gives a reliable radio link and maps the LLC frames within the physical channel GSM-GPRS. The MAC (Medium Access Control) function controls the access signalling procedures (request and grant) for the radio channel. The RLC/MAC protocol is defined in GSM 04.60.

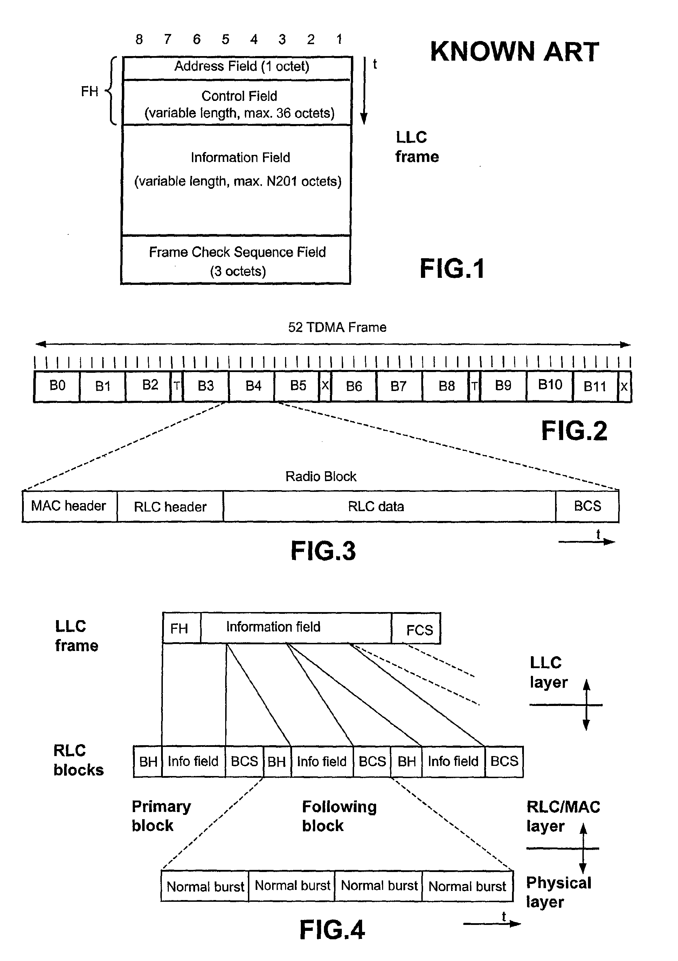

**Fig.1** of the present application (corresponding to Figure 3 of the GSM 04.64 standard) depicts the content of a so-called LLC frame which supports the homonym layer. The LLC frame of **Fig.1** timely proceeds from top to bottom and includes a FH header (Frame Header), followed by an "Information Field" of variable length, reserved to data that must be routed, followed in turn by a FCS (Frame Check Sequence) queue that contains the result of a checksum on the previous fields. The FH header includes an address field for the identification of the frame and a control field including an opportune SAPI (Service Access Point Identifier) identifier. Concerning the control of the information flow, LLC procedures, and consequently the underlying RLC/MAC procedures, are modelled on known labelled concepts as HDLC (High level Data Link Control), see ISO 4335. The HDLC control employs a cyclic numbering scheme to guarantee the integrity of the sequence of data transmitted. Independent numbering schemes are used for each logical link. The LLC procedures for data transfer are based on two operating methods, respectively: Acknowledged and Unacknowledged. In the Acknowledged mode two entities (peers) are involved, participating to a balanced data connection, where each entity undertakes the responsibility for the organisation of its data flow and for the recovery procedures of errors associated to the transmissions it originates. Each entity operates both as data source and as termination, in a link thus resulting balanced, enabling the information to flow in both directions. This operating mode is known with the ABM acronym (Asynchronous Balanced Mode) and offers a reliable service with an ordered delivery of the packets. In the Unacknowledged mode, a logic entity is involved, which can start the transmissions towards a second entity (peer) without a logical connection between the two entities has been established before. In this case the LLC layer does not assure the ordered delivery of the packets. The errors in the frames received are detected and the wrong frames can be discarded or otherwise delivered by the LLC layer, which however does not actuate any procedure for error recovery. The transformation suffered by the packet information (data and signalling) in the passage from an LLC frame to the physical layer, and vice versa, is shown in the successive **Figures 2 to 4**.

**Fig.2** (corresponding to Figure 2 of GSM 3.64) shows a multiframe of 52 GSM frames, divided into 12 radio blocks of four frames each, plus two T frames used for the synchronisation and two X idle frames. The multiframe of fig.2 is used to time multiplex the GPRS and GSM logical channels. Different structures are foreseen for radio blocks, out of which one for the transfer of packet data is visible in **fig.3**. With reference to **fig.3** (corresponding to Figure 4 of the GSM 3.64) the indicated GPRS radio block includes the following fields:
- MAC 8 bit header, contains control fields, differing for uplink and downlink directions;
- RLC header of variable length, as above;
- RLC data, contains octets relating to one or more units of the LLC protocol;
- BCS (Block Check Sequence), used for error detection .

A block similar to the previous one, but with the sole MAC header, is foreseen for the transfer of control messages. For the GPRS service the detail of the different fields belonging to RLC uplink/downlink data blocks is indicated under point 10.2 of the GSM 4.60, while for RLC/MAC control blocks, the detail is indicated under point 10.3. Additional indications are given for the detail of RLC/MAC blocks relating to the EGPRS service.

**Fig.4** (corresponding to Figure 20 of the GSM 3.64) shows the segmentation of the LLC layer frames within the radio blocks of the RLC/MAC layer. As it can be noticed, each radio block is transported by four consecutive Normal bursts of the GSM multiframe of **fig.3**. The four Normal bursts have to be intended as interleaved on four consecutive TDMA 4,615 ms frames. The meaning of the different fields has already been described, except for the BH field (Block Header) that is a block header. It is worth remembering that the design setting of the GPRS system has maintained as target the compatibility with the existing GSM standard, in order it can be easily integrated availing of the same physical channel at the Um interface. The resources necessary to the GPRS service foresee an additional number of logical channels supporting the transfer of radio blocks through the physical Packet Data Channel (PDCH). GPRS logical channels have names and functional characteristics greatly faithfully following those of the channels of the Traditional GSM, though referred to packets.

In operation the RLC protocol defines the procedures for a re-transmission of RLC blocks whose delivery was unsuccessful, in accordance to a selective scheme called ARQ (Automatic Repeat reQuest). The MAC protocol defines the procedures enabling a plurality of MS mobiles to share a common transmission means, which can also consist of different physical channels. The MAC functionality supplies an arbitration among the plurality of mobiles attempting to simultaneously transmit, taking care to avoid collisions. The GPRS service supports the notion of service quality QoS (Quality of Service), in terms of: service priority (priority), reliability, delay in the transfer of an end-to-end packet (Gm-to-Gi), and medium and peak throughput compatibly with the multi-slot class. QoS parameters, together with the operation A, B, C, class and the multi-slot capacity, form part of a user profile communicated to the network in the phase of GPRS attack.

The sub-set of MAC procedures governing the dynamic allocation of resources, provides temporary connections on the physical layer, called TBF (Temporary Block Flow), which include memory buffers to house the queues of RLC/MAC blocks. Each TBF connection enables the point-to-point unidirectional transfer of data and user signalling within a cell, between the network and a mobile station, or vice versa. Control messages for the establishment/abatement of a connection and the allocation/de-allocation of relevant support physical resources, for instance of TBF buffers, contemplates different opportunities capable of covering the whole survey foreseen in the packet transfer mode of the level-2 RR (Radio Resource) sublayer. For simplicity, it is here described a very limited survey of establishment/abatement of TBF connections and of the relevant operation modes. We can start from the establishment of a TBF uplink connection following a Packet Transfer originated by the mobile. In this case the mobile requires the assignment of a GPRS channel sending a PACKET CHANNEL REQUEST message including a request for the resources needed for the transfer of packets to the network on the physical common control channel (P)RACH ((Packet) Random Access CHannel). In case of reception, the network replies with a PACKET UPLINK ASSIGNMENT message on the common control channel (P)AGCH ((Packet) Access Grant Channel), allocating to the mobile the resources requested for the uplink transfer of packets. The resources include one or more PDCHs. The network does not assign any buffer in uplink direction (the buffer resides in the mobile). The network requires simply knowing the number of blocks that a mobile intends to transmit. We can now proceed examining the establishment of a TBF connection downlink following a Packet Transfer ended towards the mobile. In this case at the end of the paging procedure, the network sends the mobile a PACKET DOWNLINK ASSIGNMENT message in the Ready state on the common control channel, with enclosed the list of PDCH channels allocated for the downlink transfer; if the MS location is already known at the network, the PACKET DOWNLINK ASSIGNMENT message can be directly sent on the common control channel PCH (Paging CHannel) or alternatively on the Packet Common Control Channel (PCCCH) if configured, thus skipping the paging procedure. A buffer, relevant to the downlink TBF, is purposely allocated to contain the RLC/MAC blocks to be sent.
A TBF is kept alive only for the duration of the transfer of one or more LLC protocol units to the right purpose of transferring the corresponding RLC/MAC blocks. The network assigns each TBF connection its own temporary identifier, called TFI (Temporary Flow Identity). The MS mobile shall assume that the TFI value is unique among TBF competitors in each direction, uplink or downlink. An RLC/MAC data block is identified to the TBF to which it is associated through its own field where the identifier TFI is written, and another field to indicate the uplink or downlink direction of the block. Should the RLC/MAC block be referred to a control message, a field is foreseen to indicate the message transmission direction and type. Three access modes are supported for an uplink TBF, respectively:
- Dynamic Allocation;
- Extended Dynamic Allocation; and
- Fixed Allocation.
   It is the network which defines, when assigning the resources for an uplink TBF, the access mode the MS shall use. In case of fixed allocation, the network reserves to the MS a finite time interval during which the MS is allowed to transmit on the assigned resources. During the specified time interval, the MS will be the only user of the resources.

In the case of dynamic or extended dynamic allocation, the UE can access to the uplink assigned resources only when explicitly requested, i.e. when polled, by the network; at the purpose, the header of each RLC/MAC block transmitted on a PDCH channel in "downlink" direction includes an additional field called USF (Uplink State Flag), which is used by the network in the form of a flag to control the time division multiplexing of different mobile stations on a physical channel PDCH in uplink direction. We can now better qualify the already mentioned PACKET UPLINK ASSIGNMENT message, sent by the network towards the mobiles, stating that it includes: the identifier TFI of the downlink/TBF buffer containing the control block carrying this message, the list of the allocated PDCH channels (time slots), and a corresponding USF value for each allocated channel. Three bits are foreseen for the USF field that enable to unambiguously discriminate up to eight users sharing a time-slot, also in the borderline case in which the single TBF buffer are associated all the eight time slots of an FDMA frame. A TBF can be of the "open ended" or "closed ended" type: in the first case the allocation takes place on an unlimited time basis, while in the second case the allocation is limited to a pre-set number of RLC blocks, this second opportunity can offer a more fair access to the transmission means during the highest loads of the service. The network, at each RLC/MAC block period, iterates a non-standardised scheduling mechanism for the enabling/disabling of the USF flags univocally associated to TBF transmission queues allocated in uplink. The USF reserved for each PDCH allocated to a TBFj uplink are communicated to the MS mobile in the PACKET UPLINK ASSIGNMENT or PACKET TIMESLOT RECONFIGURE message. Of course the association of USFj and TBFi values shall be such to avoid any interference. The MS mobile performs the monitoring of all RLC/MAC downlink radio blocks of the PDCH assigned to it in uplink. When it detects the presence of an USF belonging to the set among those assigned to it, the uplink TBF is enabled to transmit on the subsequent radio uplink block of the PDCH.

In both the directions, the TBF resources are granted until data to be retransmitted are queued on the RLC/MAC layer. The release of the uplink resources is generally started by the mobile that counts in reverse direction the RLC blocks transmitted, but can also be started by the network. The mobile, after shipment of its last RLC block places in stand-by, waiting for a PACKET UPLINK ACK/NACK message by the network. This message includes a RRBP field (Relative Reserved Block Period), whose value specifies a well defined uplink block in which the mobile must reply to the network by sending a PACKET CONTROL ACKNOWLEDGEMENT message and then release the TBF connection, and the Final Ack Indicator (FAI) bit set to "1". Afterwards the network can re-utilise the TFI identifier of the TBF connection and the USF flag for another MS mobile. The RRBP field is associated to a S/P field indicating if the RRBP content is valid or not; in case of validity the mobile shall transmit the radio block on the uplink frame in the same time-slot where the RRBP field has been received in the downlink frame, waiting for a number of TDMA frames specified by the coding of the RRBP field. The delay is relevant to the first TDMA frame of the downlink block that contains the RRBP value. After receipt of an RLC/MAC 'block containing a valid value for RRBP the mobile has no more the need for monitoring the USF field in the RLC/MAC block downlink transmitted just before the Uplink radio block reserved to the mobile. The mechanism actuated through the pair of S/P (Suppiementary/Polling) and RRBP (Relative Reserved Block Period) fields represents a derogation to the mechanism of the USF flags, mainly valid for control messages, in the cases in which the reply of the mobile has to be monitored (polled) by the network, or vice versa.

Concerning the multiplexing of mobile stations on PDCH channels that they share in the "downlink" direction, all the TBF's procedures are more simplified since, contrarily to what happens for the uplink transfer, the intermediate of appropriate flags of the USF type is no more necessary. In fact, multiplexing is directly made by a scheduler that selects time by time the downlink TBF that shall transmit an RLC/MAC block on the current PDCH channel. The scheduler employs to this purpose a scheduling algorithm, non-standardised, which assigns the access permitted to the single TBF on the physical resources (PDCH), identifying the TBF through the relevant TFI. The release of a TBF downlink connection is started by the network that sends a RLC last data block with an FBI field (Final Block Indicator) at the true logic value, and with a valid value in the RRBP field. This enables the network to start a polling of the mobile for the reception of a PACKET DOWNLINK ACK/NACK final message. Two specular timers signal the different instants at which the assignment of the current TBF looses its validity, separately for the mobile and the network. The two timers are allocated both to the network (T3191) and the mobile (T3192) independently. The counting value used by the mobile is known from the system information periodically broadcast on the common channels, so that the it is known a priori for all the downlink connections of the whole cell. The network only, starting from the next frame to the transmission of the last data block and before its timer expires, can request the allocation of a new downlink TBF exploiting the same resources of the previous one. The mobile is forced to accept the change and must stop its timer for maintaining the resources allocated. If the re-allocation option is not used by the network, the current TFI identifier can be re-employed immediately after the loss of its validity.

### DESCRIPTION OF THE TECHNICAL PROBLEM

While a downlink TBF is in progress, the MS can easily require the opening of an uplink TBF exploiting for instance the uplink messages which acknowledge the received downlink TBF data packets (e.g.. via a PACKET DOWNLINK ACK/NACK message); this way, the MS can forward its query to the network without going through the common channels (i.e. PRACH). However, when there is no downlink TBF in progress, the establishment of an uplink TBF requires the MS to go through the steps reported in the previous sub-clause (i.e. from sending a PACKET CHANNEL REQUEST message on the common channel PRACH), thus resulting more time consuming and less efficient. Similarly, while an uplink TBF is in progress, the network can easily open a downlink TBF towards that specific MS by sending the assignment messages (e.g. PACKET DOWNLINK ASSIGNMENT message) on the resources which support the uplink TBF; otherwise, it has to go through the common channels (e.g. PCH) thus resulting being more inefficient.

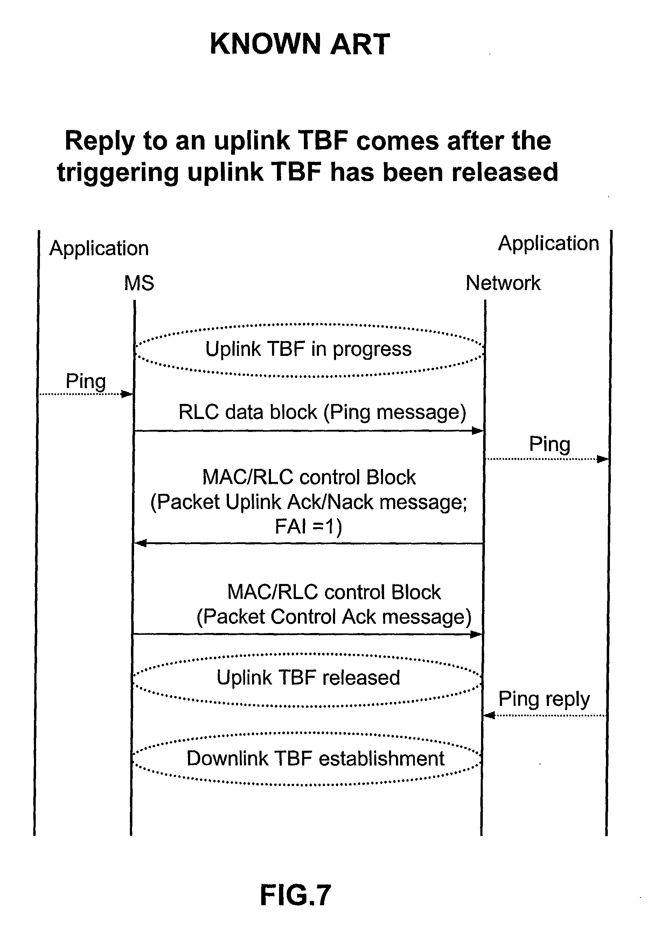

There are scenarios, like that of **Fig.7**, where the uplink TBF carries a single data block, e.g. a "Ping" message, which requires an answer from the remote application layer, i.e. the establishment of a downlink TBF. According to the current GSM specifications, If this single data block is acknowledged, the uplink TBF will be released and therefore the following downlink TBF has to be established via the common channels (e.g. via PCH). **Fig.7** shows a Message Sequence Chart (MSC) in which a reply to an uplink TBF comes after the triggering uplink TBF has been released. The FAI (Final Ack Indicator) bit of the PACKET UPLINK ACK/NACK message indicates whether the last uplink radio block is acknowledged.

In real GSM system applications a way to avoid such a scenario, and therefore to speed up the downlink TBF establishment, can be to artificially delay the sending of the PACKET UPLINK ACK/NACK message granting for the last received uplink data block, till when the answer from the application layer is available; at that point in time the downlink TBF can be established on the uplink TBF resources, which are still active as the uplink TBF has not yet been released. Though actually solving the issue, this is not a clean solution as it simulates a wrong detection condition. This trick can for instance induce the MS to misleading conclusions about the quality of the radio connection, pushing it to unjustified actions like searching for a more suitable cell.

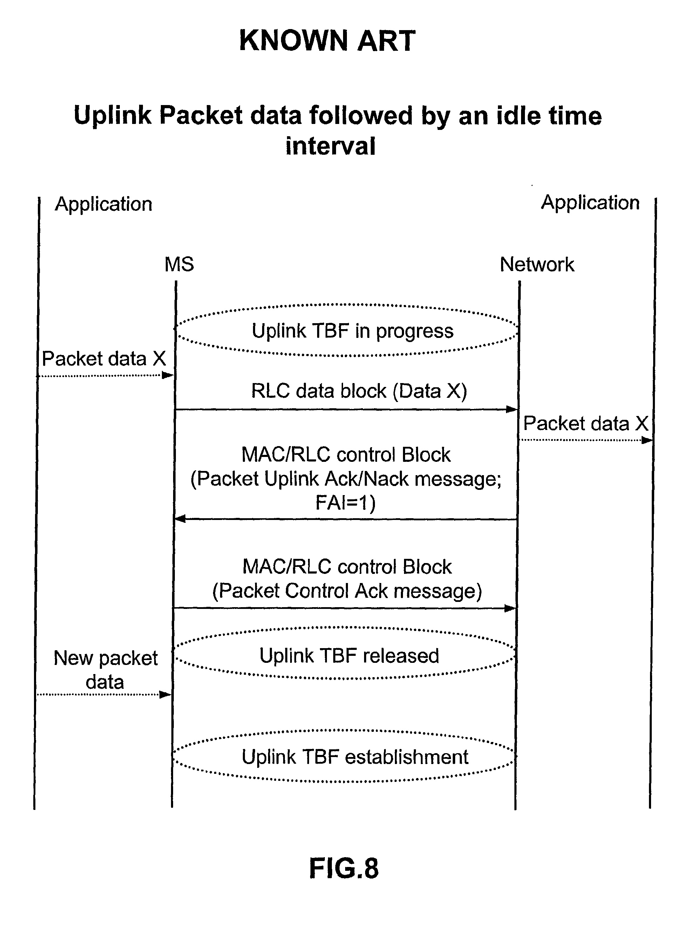

Due to the bursty nature of packet services, it can very well happen that packet data are delivered by the application layer not continuously in time but with some delay in between, like the case depicted in the MSC diagram of **fig.8**. With reference to **fig.8** this may result that, after sending the last assumed data packet X, the uplink TBF will be released, and that some time later a new data packet is delivered for transmission by the same application. This requires, if no downlink TBF is in progress, the opening of a new uplink TBF through the common channels.

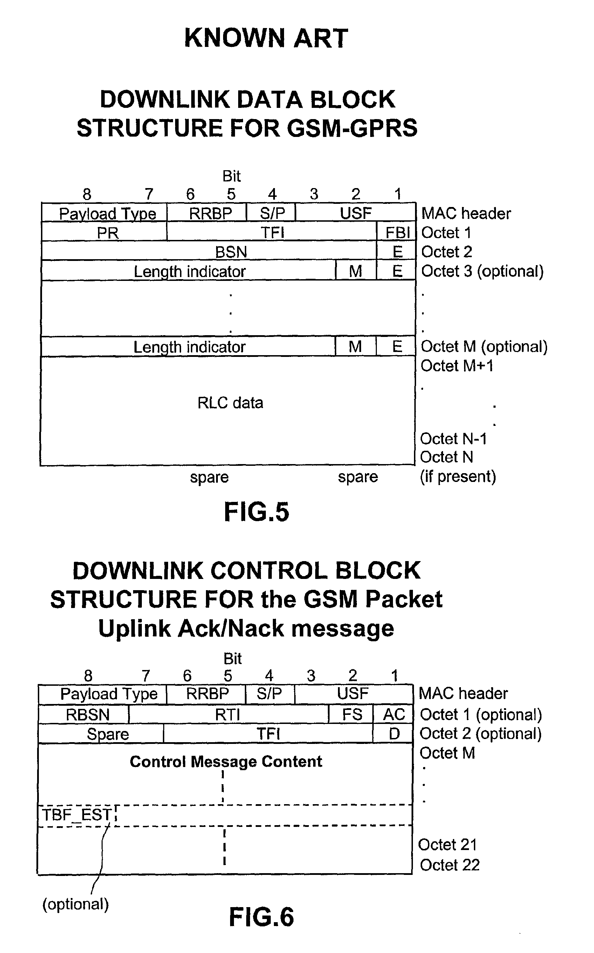

GSM has recently provided a solution to this problem, endorsed by GSM 04.60 version 8.5.0, by adding an optional field one bit long, named "TBF_EST", in the PACKET UPLINK ACK/NACK message granting for the last received uplink packet data. For the sake of completeness **Fig.5** shows the structure of a conventional downlink GSM-GPRS data block. **Fig.6** shows the structure of a downlink control block of the GSM-GPRS modified as per GSM 04.60 V8.5.0. With reference to the **fig.5** the message is like a sequence of bytes starting from a MAC header followed by the RLC data of the particular message that the network has to send to the mobile. The various bits of each byte of the MAC header belongs to named fields. Fields RRBP, S/P, USF, TFI, and FBI have been already described. As concerns the remaining fields, Payload Type is self-explanatory, BSN is the Block Sequence Number, PR indicates the Power Reduction of the current RLC block, M is the More bit used to delimit the LLC frames within a TBF, E is the Extension bit used to signal whether an optional RLC octet is present, and Length Indicator is used to delimit LLC frames within an RLC data block.

With reference to the **fig.6** the fields named as the preceding **fig.5** have the same meaning, while as concerns the new ones: RBSN is the Reduced Block Sequence Number described in paragraph 9.1.4a of the mentioned document, RTI is the Radio Transaction Identifier used to group the downlink RLC/MAC control blocks that make up an RLC/MAC control message, FS is the Final Segment (FS) bit used to indicate whether the downlink RLC/MAC control block contains the final segment of an RLC/MAC control message, AC is the Address Control (AC) bit used to indicate whether the optional TFI/D octet is present in the header of downlink RLC/MAC control blocks, and D is the Direction bit used to indicate the direction of the TBF. As can be noted, a relevant octet of the Control Message Contents referred to the PACKET UPLINK ACK/NACK message includes the TBF_EST bit. If TBF_EST field is included, the MS is allowed, at the very time instant indicated by the RRBP field reported in the PACKET UPLINK ACK/NACK message, to request the establishment of a new uplink TBF exploiting the resources of the just released uplink TBF. After sending its request, the MS will start a timer (T3168: Ref. GSM 04.60) while waiting for the network answer. As can be easily deduced from the above listed limitations, the current GSM specifications do not allow for an extensive and complete solution of the problem. Though improving the situation, the TBF_EST flag solution has the following limitations:
- The MS is allowed to forward its query exactly, i.e. not before nor after, the RRBP field indicated by the network. This implies that, if the need for establishing an uplink TBF comes after that RRBP frame, the MS will have to go via the common channels anyhow.
- Timer T3168 is an information element which is broadcast by the network to all MSs via the mandatory (Packet) System Information Type 13. Therefore, in general, it is not possible to tailor such a timer per connection base. Though timer T3168 can also be delivered per user base via Packet System Information Type 1, the support of this System information type is optional and managing its content on connection base is not as easy task for the network.
- While timer T3168 is running, establishment of downlink TBF is not foreseen nor even allowed.
- While timer T3168 is running, no other message from the network is expected but PACKET UPLINK ASSIGNMENT or PACKET ACCESS REJECT message. This implies that the network has no way, after timer T3168 has started, to free the resources of the released uplink TBF and possibly assign them to another user: it has to wait till timer T3168 is expired.

### OBJECTS OF THE INVENTION

The main object of the present invention is that to overcome the drawbacks of the known art and to indicate a method for delaying, after the release of an uplink TBF, the final release of the associated resources, which can be exploited for possibly allocating a new uplink or downlink TBF.

### SUMMARY AND ADVANTAGES OF THE INVENTION

In order to overcome the above limitations, object of the present invention is a method for delaying the final release of the resources allocated in a mobile radio network to a released uplink TBF, as disclosed in the claims.

According to the method of the invention the network at the reception of the last uplink data packet, can optionally decide to include, in the PACKET UPLINK ACK/NACK message granting for the last received uplink data packet, a counting value named hereafter timer Txxxx, at the following purposes:
- At the reception of the PACKET UPLINK ACK/NACK message including timer Txxxx, the MS shall, whether or not it has new uplink data packet to send, start timer Txxxx and continue to be active on the resources (both uplink and downlink) of the released TBF.
- While timer Txxxx is running, the MS can at any time forward its query for opening of a new uplink TBF on the uplink resources. This particularly means that, in case of dynamic or extended dynamic allocation where the MS is allowed to transmit only at the RRBP radio blocks indicated by the network; the MS can ask for an uplink TBF establishment either at the RRBP radio block at which it has to acknowledge (via the PACKET CONTROL ACKNOWLEGMENT or a PACKET RESOURCE REQUEST message) the received PACKET UPLINK ACK/NACK message, as currently foreseen by GSM specification (Ref. GSM 04.60 version 8.5.0), or at any following RRBP periods signalled by the network via a polling message. Polling messages can be for instance a subsequent PACKET UPLINK ACK/NACK granting for the last data packet or an explicit PACKET POLLING REQUEST message.
In case of Static allocation, two cases can apply:
- Case 1): at the release of the uplink TBF, the MS has completely exploited the time period assigned by the network for that TBF;
- Case 2) at the release of the uplink TBF, the MS has still some time before the time period assigned by the network for that TBF ends.

At the purpose of this invention, Case 1) can be managed in the same way as a dynamic or extended dynamic allocation, according to the description provided above. While for Case 2) we can assume that, during timer Txxxx running and till the exhaustion of the assigned time period, the MS can forward its query at any RRBP block; while after expiry of the assigned time period but still during timer Txxxx running, the MS will behave as for the case of dynamic or extended dynamic allocation, according to the description provided above.

While timer Txxx is running, any received new PACKET UPLINK ACK/NACK message granting for the last data packet, will be acknowledged by the MS and shall stop and possibly restart (if included in the received message) timer Txxxx. In details, this implies that the network can stop a previously activated Txxxx, by sending a new PACKET UPLINK ACK/NACK message not including such a timer; or it can extend Txxxx duration, by sending a new PACKET DOWNLINK ACK/NACK message including Txxxx (with the same or with different value respect to the last assigned).

While timer Txxxx is running, the network can at any time establish a downlink TBF sending for instance a PACKET DOWNLINK ASSIGNMENT or a TIME SLOT RECONFIGURE message on the downlink resources of the released TBF; the MS shall expect such a message, and react according to a normal downlink TBF establishment procedure.

As timer Txxxx is signalled on connection base, its value can be defined based on the specific uplink TBF which is going to be released, as well as taking into account the network infrastructure internal delays. Possible enhancement in case of dynamic or extended dynamic allocation should be to include in the PACKET UPLINK ACK/NACK message granting for the last received uplink data packet, besides timer Txxxx, also the System Frame Numbers (SFN), or equivalently the radio blocks, at which the MS is allowed to autonomously forward (i.e. without waiting for an explicit invitation from the network) its query during timer Txxxx running; this avoid the network to explicitly poll the MS. The way how to signal the allowed SFNs can follow the method described in the International Patent Application W001/72080, titled: "ACCESS CHANNEL SCHEDULING IN A RADIO COMMUNICATION SYSTEM", belonging to the same Assignee. In particular, the invention concerns a process to control the access of the MSs to uplink shared channels, where the network signals, besides additional other information, the System Frame Numbers at which an MS is allowed to access to a specific uplink shared channel. To mark the allowed frames, an expression of the following type is used: SFN module [P1] = P2, where SFN is the granted System Frame Number and P1 and P2 are two parameters signalled by the network.

It can be appreciated the flexibility which the method of the invention confers to the network and the mobile in the task of delaying the definitive release of resources assigned to the released uplink TBF.

Further object of the invention is a first variant of the method in which the network, considering that the mobile during the counting time set with the new field included in the PACKET UPLINK ACK/NACK message is again listening, exploits this time for allocating a downlink TBF through the needed handshake steps.

Further object of the invention is a second variant of the method in which the mobile during the counting time set with the new field included in the PACKET UPLINK ACK/NACK message, forwards to the network a request for a downlink TBF.

### BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:
- **fig.1** (already described) shows the formats of serial information constituting an LLC frame of the known GSM-GPRS network;
- **fig.2** (already described) shows a multiframe of 52 GSM frames used to time multiplex the GPRS and GSM logical channels.
- **fig.3** (already described) shows the content of a radio block included in the multiframe of fig.2;
- **fig.4** (already described) shows the physical layer underneath the radio blocks of the preceding Figures;
- **fig.5** (already described) shows the structure of a downlink data block of GSM-GPRS standard;
- **fig.6** (already described) shows the structure of a downlink control block of the most recent GSM-GPRS standard;
- **Figures 7 and 8** (already described) show two message sequence charts of the release of an uplink TBF in accordance with the known art;
- **fig.9** shows the structure of a downlink control block of the present invention;
- **Figures 10 to 15** show as many message sequence charts of the release of an uplink TBF in accordance with the method of the present invention;

### DETAILED DESCRIPTION OF AN EMBODIMENT OF THE INVENTION

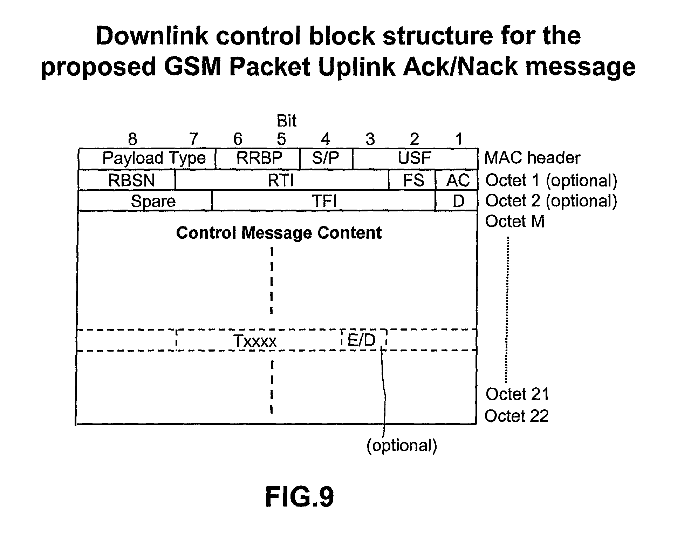

With reference to **fig.9** we see the structure of a downlink control block which differs from the structure depicted in **fig.6** because the field TBF_EST is not included in the Control Message Contents, while two new fields Txxxx and E/D are instead included. Field Txxxx includes a counting time value (timer) optionally transmitted by the network at the on-air interface together with a bit E/D which, if asserted, validates the Txxxx field. There is another opportunity for the network to send the only timer Txxxx and not the A/D bit, and the mobile shall take the Txxxx field automatically valid. The first case is assumed hereafter for completeness. As already said before, the two new fields are directed to the mobile for giving to it some extra time when the network is going to de-allocate the uplink TBF. The mobile which decodes the two (or the one) fields and finds the enabling/disabling bit asserted, knows that the network keeps the resource allocated to the uplink TBF reserved until the counting time expires. If the mobile has something new to send in the meanwhile it can make use of those resources without using the common signalling channels. Different opportunities are analysed in the following Figures.

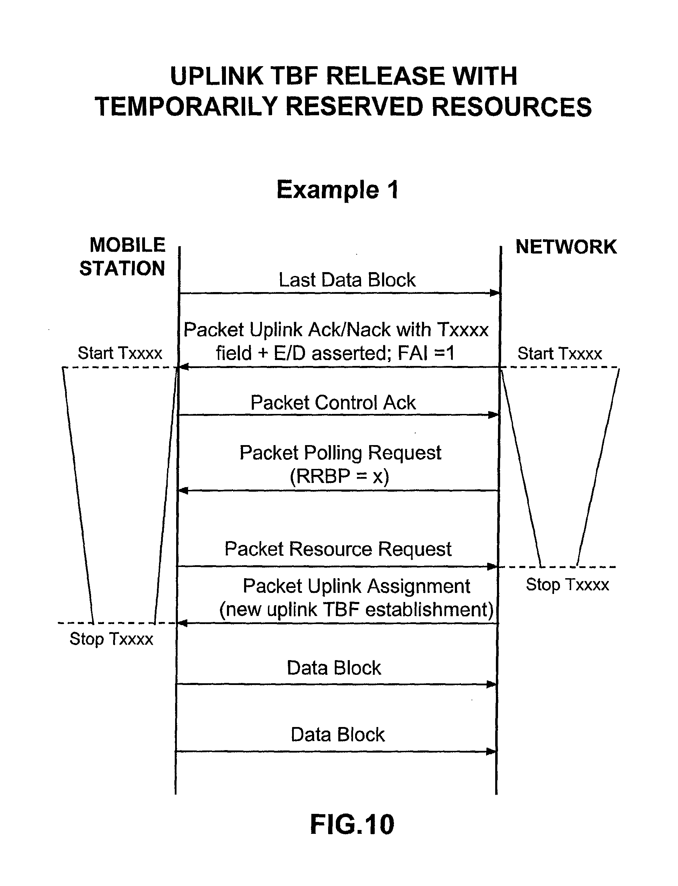

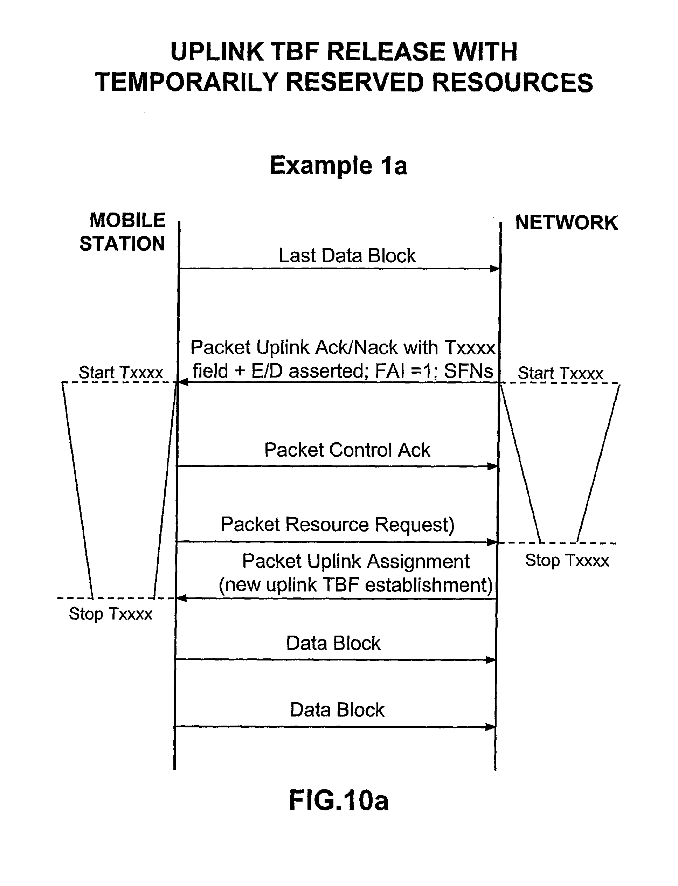

**Fig.10** shows a first Message Sequence Chart (MSC) of the release of an uplink TBF involving the Txxxx and E/D fields. The MSC diagram evolves through the following sequential steps: the mobile sends its last data block to the network. The network sends to the mobile the new PACKET UPLINK ACK/NACK message including the Txxxx field and E/D bit asserted, and not containing the TBF_EST flag of the prior art. The Txxxx field contains an opportunely dimensioned counting value of the radio block periods past since the sending of the PACKET UPLINK ACK/NACK message. The mobile receives the preceding message and decodes the two fields Txxxx and E/D, if the E/D bit is asserted it knows the network is keeping reserved the resource allocated to the uplink TBF until timer Txxxx expires. In the present case, the mobile has to send supplementary data blocks turned up after the last block and the PACKET CONTROL ACK message acknowledging the PACKET UPLINK ACK/NACK message with FAI field set to "1" have been sent. As soon as the network polls the MS via a PACKET POLLING REQUEST message containing a valid RRBP field, the MS sends its request for opening a new uplink TBF via a PACKET RESOURCE REQUEST message at the indicated RRBP, exploiting the uplink resources already allocated. Note that during the counting time the resources allocated to the released uplink TBF are not generally active on-air between the network and the specific MS but only reserved for that time; however the network can activate them towards any other MS having an open TBF (downlink or uplink) on those same resources. At the detection of the PACKET UPLINK ASSIGNMENT message, the MS stops Txxxx, i.e. the counting time, and acts upon the network assignment according to the rules defined in GSM 04.60. The MS can then send the supplementary incoming packet data on the new established uplink TBF, following the rules defined in GSM 04.60.

**Fig.10a** shows a Message Sequence Chart (MSC) which differs from the preceding one in that the network includes in the PACKET UPLINK ACK/NACK message granting for the last received uplink data block also the System Frame Numbers (SFN) at which the MS is allowed to send its requests for a new uplink TBF, while the counting time Txxxx is not yet expired. As soon as supplementary data are available, the MS checks the counting value status and, if not yet expired, it sends the PACKET RESOURCE REQUEST message at the next allowed SFN without expecting to be polled by the network.

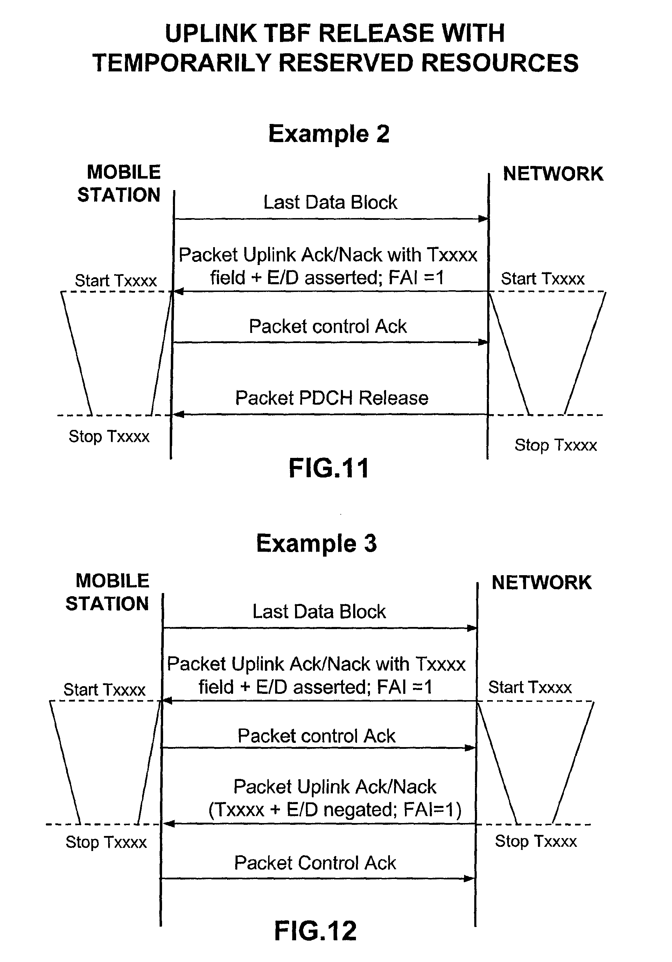

**Fig. 11** shows a Message Sequence Chart (MSC) which differs from the preceding one mainly because during the counting time the network sends to the MS a PACKET PDCH RELEASE message containing the indication to release the still active resources. At the detection/sending of this message, respectively the MS and the network stops the counting time and immediately release the indicated resources.

**Fig.12** shows a Message Sequence Chart (MSC) which differs from the preceding one mainly because during the counting time the network sends to the MS a further PACKET UPLINK ACK/NACK message with the FAI field set to "1" and E/D bit negated. The aim is that of stopping the counting time, for example, because the reserved resources are needed immediately for serving another MS. In such a case the MS takes this last message as valid, acknowledges its detection by sending a PACKET UPLINK ACK/NACK message at the indicated RRBP and immediately releases the resources. The network in turn releases the resources as soon as the expected PACKET UPLINK ACK/NACK message is detected.

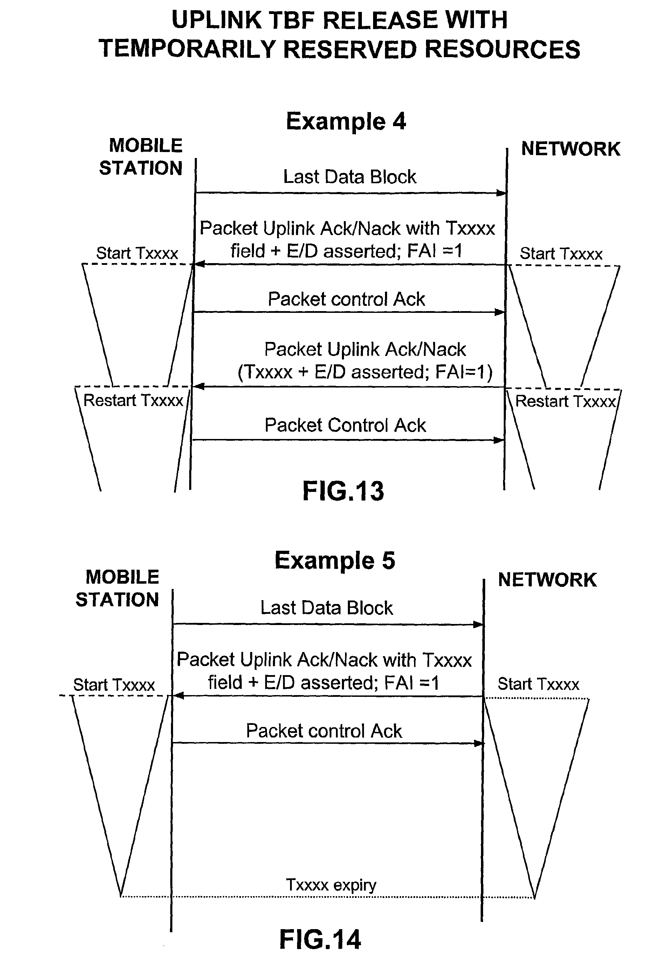

**Fig.13** shows a Message Sequence Chart (MSC) which differs from the preceding one mainly because during the counting time the network sends a further PACKET UPLINK ACK/NACK message to the MS with the E/D bit asserted and the counting time Txxxx set at a new prefixed value. The aim is that of extending the counting time. In such a case, the MS takes this last message as valid, acknowledges its detection by sending a PACKET UPLINK ACK/NACK message at the indicated RRBP and immediately restarts the couting time Txxxx at the new indicated value.

**Fig.14** shows a Message Sequence Chart (MSC) which differs from the preceding one mainly because the counting time expires before the mobile station, or the network, tries to establish a new respectively uplink or downlink TBF. At the expiration of Txxxx, the resources allocated to the uplink TBF are definitely released at both sides (i.e. by the MS and the network).

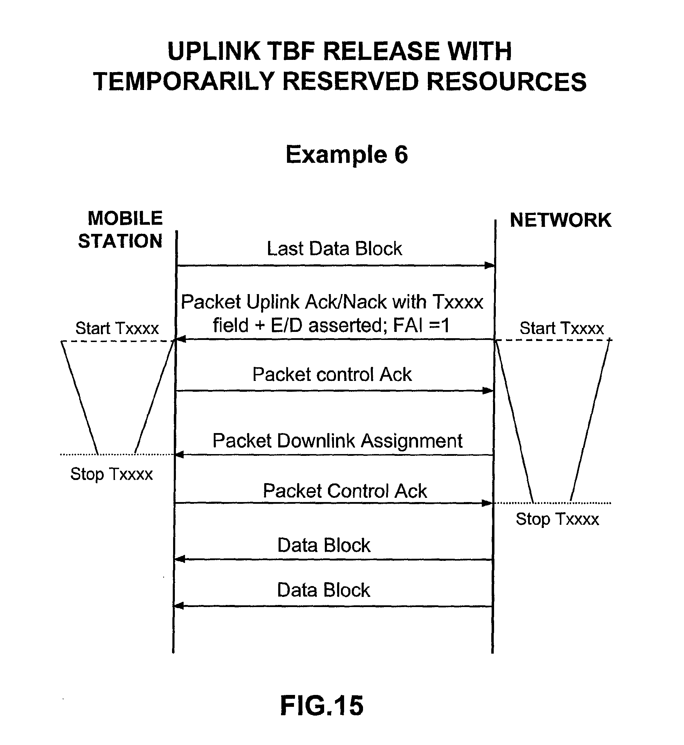

**Fig.15** shows a Message Sequence Chart (MSC) which differs from the MSC of fig.10 mainly because during the counting time the network establishes a downlink TBF. At the detection of the PACKET UPLINK ASSIGNMENT message, the MS sends the PACKET CONTROL ACK message at the indicated RRBP, stops the counting time Txxxx and acts upon the new assignment according to the rules defined in GSM 04.60. The network in turn, at the detection of the expected PACKET CONTROL ACK message, stops the counting time and proceeds according to the normal procedures defined in GSM 04.60.

## Claims

1. Method for delaying the final release of the resources temporarily allocated in a mobile radio network to a connection for receiving radio packets transmitted in uplink by at least a mobile station on cyclically numbered sequential frames having fixed duration, the radio packets conveying data or signalling of a transmission protocol exploiting control channels for exchanging relevant handshake control messages between the network and the mobile station for the allocation or de-allocation of said resources and the held of a correct transmission, **characterised**
**in that** includes the following steps:
a) the mobile sends its last data packet to the network;
b) the network sends to the mobile an acknowledgement message (Packet Uplink Ack/Nack), granting the last received uplink data packet, including a valid extension field (Txxxx, E/D) containing a counting value of the radio frames elapsed since the sending of said acknowledgement message;
c) the network, after acknowledgement from the mobile, starts a counting during which a request for new packet transmissions from the mobile or any downlink message involving the listening by the mobile is valid up to said counting expires;
d) the mobile receives said acknowledgement message and decodes the extension field (Txxxx) to start a counting during which it knows the resources allocated to uphold the uplink packet transmission are kept reserved by the network until said counting expires, and that during that time it is allowed to request for new uplink packet transmissions as well as the network can send messages, like the request for a downlink packet transmission, the mobile shall act upon.

2. Method in accordance with claim 1, **characterised in that**:
• the network at step c) sends to the mobile a polling message (Packet Polling Request) with a field (RRBP) including the indication of the instant in which the mobile must reply to the network;
• the mobile at step d) sends its acknowledgement message (Packet Control Ack, Packet Resource Request) to the network in the indicated instant, including a request for the transmission of one or more supplementary data packets;
• the network stops its counting and authorises the mobile at the uplink transmission;
• the mobile stops its counting and sends on the reserved resources one or more supplementary data packets turned up after the last packet is transmitted.

3. Method in accordance with claim 1, **characterised in that**:
• the mobile at step d) sends its acknowledgement message ( Packet Control Ack, Packet Resource Request) to the network in one of the frames indicated by the network via the last sent message (Packet Uplink Ack/Nack) granting the last received uplink data packet, including a request for the transmission of one or more supplementary data packets;
• the network stops its counting and authorises the mobile at the uplink transmission;
• the mobile stops its counting and sends on the reserved resources one or more supplementary data packets turned up after the last packet is transmitted.

4. Method in accordance with claim 1, **characterised in that**:
• the network at step c) sends to the mobile a release message (Packet PDCH Release) that the mobile shall acknowledge, then stop its counting and definitely release the resources reserved for uplink transmission;
• the mobile at step d) receives the release message (Packet PDCH Release) and stops its counting.

5. Method in accordance with claim 1, **characterised in that**:
• the network at step c) repeats the step b) except for including an invalid extension field (E/D) in the second acknowledgement message (Packet Uplink Ack/Nack) sent to the mobile, then stops its counting;
• the mobile at step d) decodes the invalid extension field (E/D) and stops its counting.

6. Method in accordance with claim 1, **characterised in that**:
• the network at step c) repeats the step b) with a new a counting value and restarts its counting to the new value;
• the mobile at step d) decodes the new counting value and restarts its counting to the new value.

7. Method in accordance with claim 1, **characterised in that**:
• the network at step c) sends to the mobile an assignment message (Packet Downlink Assignment) to inform the mobile of having assigned resources for downlink packet transmission;
• the mobile at step d) receives the assignment message, stops its counting, sends to the network an acknowledgement message (Packet Control Ack) to the preceding assignment message, and receives packet data from the network;
• the network stops its counting at the reception of the acknowledgement message (Packet Control Ack) from the mobile.
